(19) Europäisches Patentamt
European Patent Office
Office européen des brevets

(11) Veröffentlichungsnummer: **0 012 297**
**B1**

# (12) EUROPÄISCHE PATENTSCHRIFT

(45) Veröffentlichungstag der Patentschrift: **12.05.82**

(51) Int. Cl.³: **C 09 B 29/15**, C 09 B 31/068, C 10 L 1/22, C 10 M 1/32

(21) Anmeldenummer: **79104809.3**

(22) Anmeldetag: **01.12.79**

## (54) In organischen Lösungsmitteln lösliche Gemische von Mono- oder Disazofarbstoffen der Beta-Naphtholreihe und deren Verwendung beim Färben von Mineralölprodukten, Wachsen oder Fetten.

(30) Priorität: **07.12.78 DE 2852863**

(43) Veröffentlichungstag der Anmeldung: **25.06.80 Patentblatt 80/13**

(45) Bekanntmachung des Hinweises auf die Patenterteilung: **12.05.82 Patentblatt 82/19**

(84) Benannte Vertragsstaaten: **BE CH DE FR GB IT NL**

(56) Entgegenhaltungen: **keine**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Hansen, Guenter, Dr. Dipl.-Chem., Mundenheimer Strasse 168, D-6700 Ludwigshafen (DE)**
Erfinder: **Merger, Franz, Dr. Dipl.-Chem., Max-Slevogt-Strasse 25, D-6710 Frankenthal (DE)**
Erfinder: **Nestler, Gerhard, Dr. Dipl.-Chem., Rubensstrasse 25, D-6700 Ludwigshafen (DE)**
Erfinder: **Zeidler, Georg, Mutterstadter Strasse 19, D-6701 Dannstadt-Schauernheim 1 (DE)**

**EP 0 012 297 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# In organischen Lösungsmitteln lösliche Gemische von Mono- oder Disazofarbstoffen der Beta-Naphtholreihe und deren Verwendung beim Färben von Mineralölprodukten, Wachsen oder Fetten

Die Erfindung betrifft Gemische von Verbindungen der allgemeinen Formel I

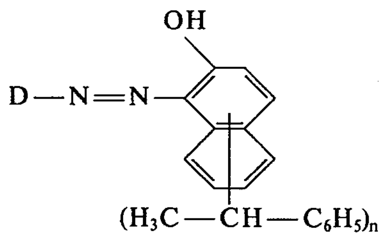

in der

D einen Rest der Formel

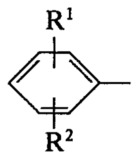

oder

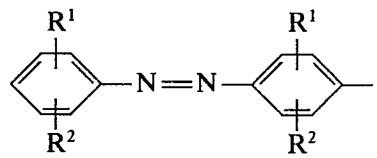

n eine der Zahlen 0, 1, 2 oder 3 und
$R^1$ und $R^2$ unabhängig voneinander Wasserstoff, $C_1$- bis $C_4$-Alkyl, Methoxy oder Äthoxy bedeuten, wobei die Gemische mindestens 3 Farbstoffe mit unterschiedlichem n enthalten.

Alkylreste für $R^1$ und $R^2$ sind z. B. Butyl, Propyl, Äthyl und insbesondere Methyl.

Zur Herstellung der Verbindungsgemische der Formel I kann man Diazoniumverbindungen von Aminen der Formel

$$D{-}NH_2$$

mit einem Kupplungskomponentengemisch der Formel II

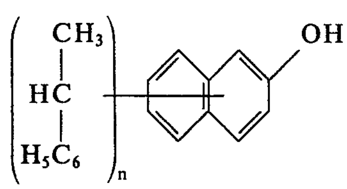

nach an sich bekannten Methoden umsetzen.

Die Kupplungskomponentengemische erhält man durch Umsetzung von $\beta$-Naphthol mit Styrol unter Säurekatalyse, z. B. mit Schwefelsäure.

Die Gemische der Verbindung der Formel I zeichnen sich durch eine hervorragende Löslichkeit in organischen Lösungsmitteln, insbesondere Kohlenwasserstoffen aus. Einzelne Kohlenwasserstoffe sind dabei z. B. Benzol, Toluol, Xylole, Testbenzin, Äthylbenzol und z. B. die unter dem Warenzeichen Shellsol bekannten Produkte.

Die Verbindungen der Formel I sind aufgrund ihrer Löslichkeitseigenschaften für die Herstellung von Stammlösungen für die Färbung von Mineralölen, insbesondere Heizöl sowie Wachsen und Fetten vorzüglich geeignet.

Von besonderer Bedeutung sind dabei Farbstoffgemische der Formel

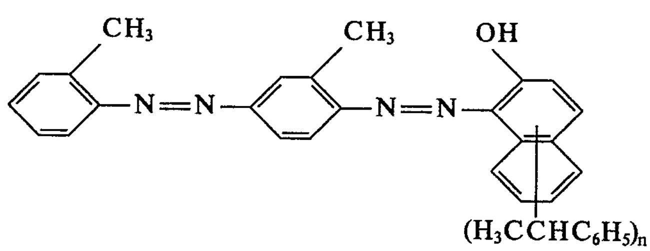

wobei n die angegebene Bedeutung hat. Bevorzugte Gemische setzen sich z. B. wie folgt zusammen:

1 – 10% = n = 0
20 – 50% = n = 1
30 – 50% = n = 2
0 – 10% = n = 3

Aus der JP-B-4 731 925 ist schon ein Farbstoff der Formel

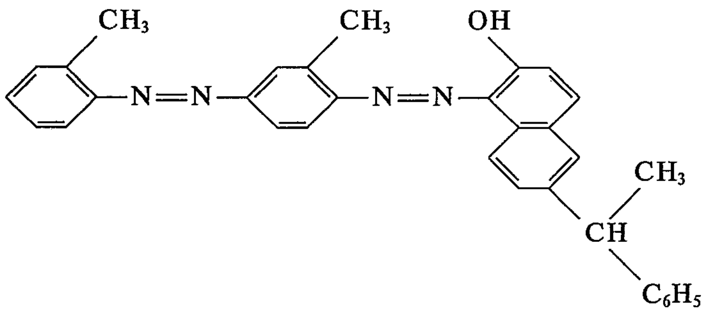

bekannt, der jedoch in Kohlenwasserstoffen eine ungenügende Löslichkeit aufweist.

In den folgenden Beispielen beziehen sich Angaben über Teile und Prozente, sofern nicht anders vermerkt, auf das Gewicht.

Beispiel 1

22,5 Teile 4-Amino-3,2′-dimethyl-azobenzol werden in einer Mischung aus 175 Teilen Wasser und 30 Teilen 10 n-Salzsäure über Nacht bei Raumtemperatur gerührt und nach Zugabe von 100 Teilen Eis mit einer konzentrierten, wäßrigen Lösung aus 6,9 Teilen Natriumnitrit versetzt. Die Diazotierung ist im Verlauf von 3 bis 4 Stunden bei 0 bis 5° C beendet; man entfernt darauf den Nitritüberschuß wie üblich mit Amidosulfonsäure. In die Suspension des Diazoniumsalzes tropft man anschließend bei 10 bis 15° C unter intensivem Rühren eine Lösung von 28,5 Teilen eines Kupplungskomponentengemisches in 100 Teilen Xylol ein. Die Kupplung ist nach dem Rühren über Nacht bei Raumtemperatur beendet. Nachdem man durch mehrmaliges Waschen mit Wasser die organische Phase neutralisiert hat, trennt man die wäßrige Phase ab und erhält aus der Farbstofflösung nach dem Abdestillieren des Xylols 59 Teile eines teerartigen roten Farbstoffs der Formel

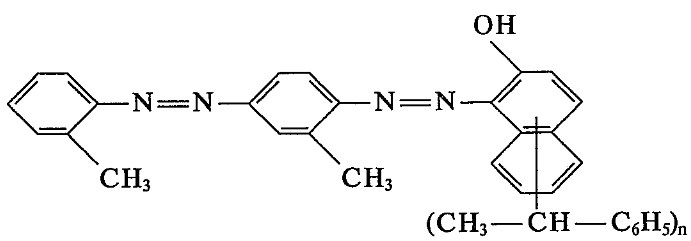

der unbegrenzt mit Aromaten und Aliphaten mischbar ist und sich zum Färben von Treibstoffen, Heizölen, Lacken, Wachsen und Fetten sehr gut eignet.

Das Kupplungskomponentengemisch erhält man wie folgt: Ein Gemisch von 144 Teilen $\beta$-Naphthol und 1 Teil konz. Schwefelsäure wird bei 120° C unter Rühren innerhalb von 30 Minuten mit 156 Teilen Styrol versetzt und dann 2 Stunden bei 120° C nachgerührt. Nach der Aufarbeitung erhält man ein Gemisch, das folgende gaschromatographisch ermittelte Zusammensetzung aufweist: 7,6% $\beta$-Naphthol, 37,5% Mono-($\alpha$-phenyläthyl)-$\beta$-naphthol, 53% Bis-($\alpha$-phenyläthyl)-$\beta$-naphthol, Rest nicht identifizierte Verbindungen.

Analog dem Beispiel 1 lassen sich die in der nachfolgenden Tabelle aufgeführten Farbstoffmischungen mit ähnlichen coloristischen Eigenschaften herstellen.

| Bsp. | Diazokomponente | Kupplungskomponente | Farbton in Xylol |
|---|---|---|---|
| 2 | 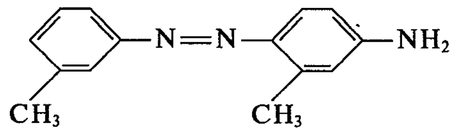 | 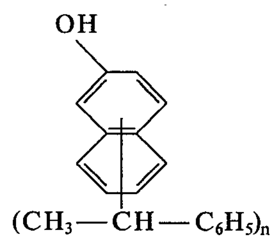 | rot |
| 3 | 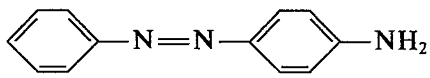 | desgl. | rot |
| 4 | 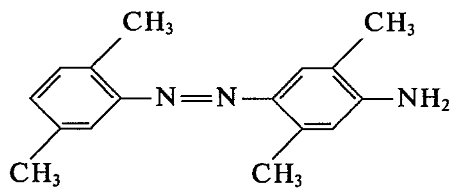 | desgl. | rot |
| 5 | 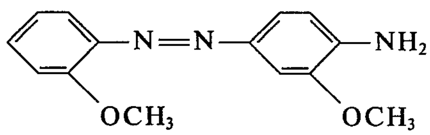 | desgl. | rot |
| 6 | 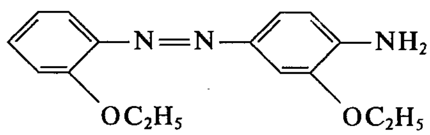 | desgl. | rot |
| 7 | 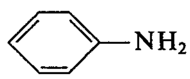 | desgl. | orange |
| 8 | 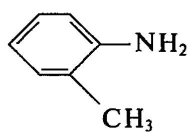 | desgl. | orange |
| 9 | 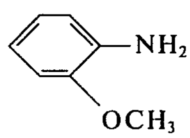 | desgl. | orange |
| 10 | 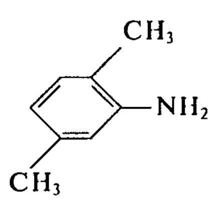 | desgl. | orange |

**Patentansprüche**

1. In organischen Lösungsmitteln lösliche Verbindungsgemische der allgemeinen Formel

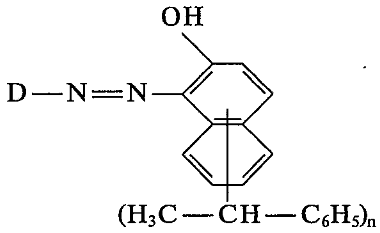

in der

D einen Rest der Formel

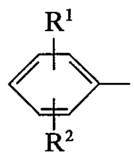

oder

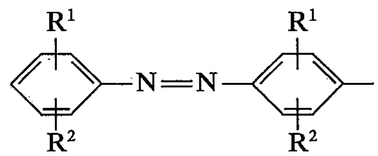

n eine der Zahlen 0, 1, 2 oder 3 und

$R^1$ und $R^2$ unabhängig voneinander Wasserstoff, $C_1$- bis $C_4$-Alkyl, Methoxy oder Äthoxy bedeuten, wobei die Gemische mindestens 3 Farbstoffe mit unterschiedlichem n enthalten.

2. Verbindungsgemische gemäß Anspruch 1 der Formel

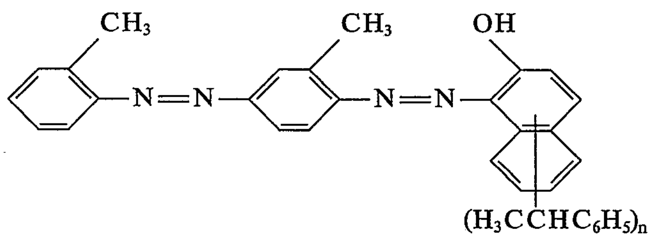

wobei n die angegebene Bedeutung hat.

3. Verwendung der Verbindungsgemische gemäß Anspruch 1 zum Färben von Mineralölprodukten, Wachsen oder Fetten.

**Claims**

1. A mixture, soluble in organic solvents, of compounds of the general formula

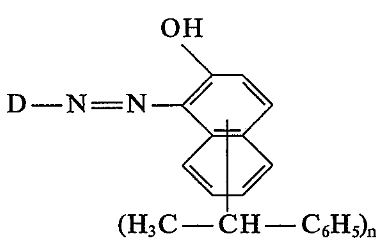

where

D is a radical of the formula

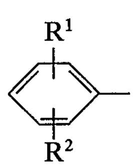

or

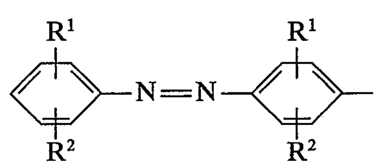

n is one of the numbers 0, 1, 2 or 3 and

$R^1$ and $R^2$ independently of one another are hydrogen, $C_1-C_4$-alkyl, methoxy or ethoxy, the mixture containing at least 3 dyes with different n's.

2. A mixture of compounds as claimed in claim 1, of the formula

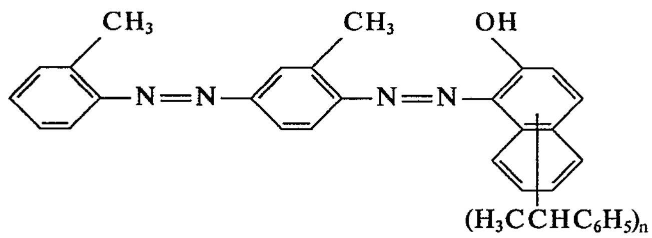

where n has the stated meaning.

3. Use of a mixture of compounds as claimed in claim 1 for coloring petroleum products, waxes or greases.

**Revendications**

1. Mélanges de composés solubles dans des solvants organiques, de la formule générale

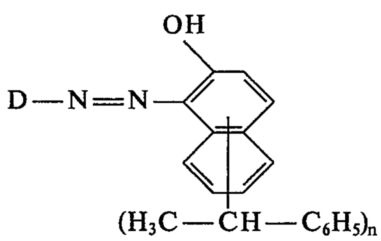

dans laquelle

D représente un reste de la formule

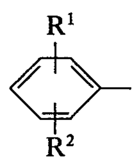

ou

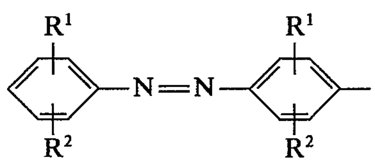

n vaut 0, 1, 2 ou 3 et

$R^1$ et $R^2$ représentent, indépendamment l'un de l'autre, un atome d'hydrogène, un radical alcoyle en $C_1$ à $C_4$ ou un groupe méthoxy ou éthoxy, chaque mélange comprenant au moins trois colorants, pour lesquels n possède des valeurs différentes.

2. Mélanges de composés suivant la revendication 1, de la formule

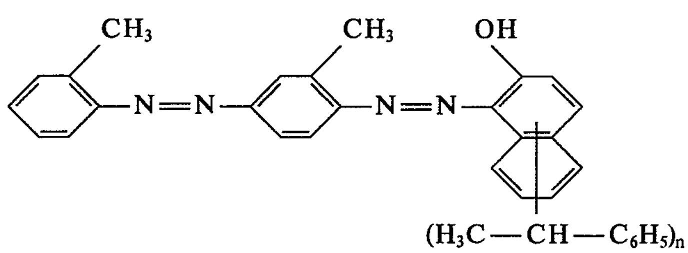

où n possède la signification définie.

3. Utilisation des mélanges de composés suivant la revendication 1 pour la coloration d'huiles minérales, de cires et de matières grasses.